# EUROPEAN PATENT SPECIFICATION

(11) **EP 4 299 974 B1**
(45) Date of publication and mention of the grant of the patent: **07.10.2026**
(21) Application number: 23182634.8
(22) Date of filing: 30.06.2023
(51) Int. Cl.: F21S 8/02, F21S 8/06, F21V 8/00, F21Y 115/10, F21Y 103/10, F21Y 113/13

(54) **AN OPTIC MODULE, A LIGHTING UNIT AND A METHOD**
OPTISCHES MODUL, BELEUCHTUNGSEINHEIT UND VERFAHREN
MODULE OPTIQUE, UNITÉ D'ÉCLAIRAGE ET PROCÉDÉ

(30) Priority: 01.07.2022 NL 2032353
(43) Date of publication of application: 03.01.2024
(73) Proprietor: ETAP Lighting International NV, 2390 Malle (BE)
(72) Inventor: DE KETELAERE, Ward Marc Nik, B-2390 Malle (BE)
(74) Representative: V.O.

(56) References cited:
- WO-A1-2021/130793
- CN-A- 111 913 249
- US-A1- 2021 141 148
- US-B1- 10 386 571

## Description

The invention relates to an optic module for reshaping light emitted from a substantially elongated light source.

In modern lighting units, LEDs and laser-based light sources can be used as a light source, both for visible and UV light. Then, light generated by an array of LEDs or lasers forms a combined light beam for illuminating a structure to be illuminated.

It appears, in practice, that the design of suitable refractive optical elements is no sinecure. As an example, due to the point source behaviour of LED's, the luminance of lighting units can be relatively high and strongly dependent on a viewing angle towards the lighting unit, thus causing dazzling experience to persons who move through a space that is illuminated by the lighting unit. Therefore, there is a need for providing an optic module for reshaping light into a collimated beam. It appears, further, that it is hard to realize a collimated beam using an optic module having a similar length as the elongated light source has.

It is an object of the present invention to provide a lighting unit comprising a substantially elongated light source and an optic module for reshaping light emitted from the substantially elongated light source into a collimated beam, the optic module having a similar length as the elongated light source has.

Thereto, according to an aspect of the invention, a lighting unit comprising a substantially elongated light source and an optic module for reshaping light emitted from the substantially elongated light source is provided according to claim 1. The optic module comprises a generally block shaped light mixing chamber for aligning with the substantially elongated light source, the light mixing chamber having a light receiving side facing the light source and a light emitting side opposite to the light receiving side, a multiple number of light emitting flanges arranged next to each other mainly parallel to the light mixing chamber, running away therefrom and having a respective light entrance side facing towards the light emitting side of the mixing chamber, and a light distributor optically coupled between the light emitting side of the mixing chamber and the respective light entrance sides of the light emitting flanges, the light distributor having a multiple number of groups of elongated light guiding structures, wherein the elongated light guiding structures of all groups have respective light receiving ends arranged next to each other so as to be aligned and optically coupled with the light emitting side of the block shaped light mixing chamber, wherein the light receiving ends of the groups of elongated light guiding structures are aligned in an alternating manner, and wherein the elongated light guiding structures of each group each have a light emitting end optically coupled, per group, to the light entrance side of a respective light emitting flange.

By combining a block shaped light mixing chamber with a group of light emitting flanges interposed by a light distributor distributing light propagating through the mixing chamber, a collimated light beam can be obtained. Further, due to the excellent collimation performance of the optic module, the structure of the optic module may be arranged so as to have a similar length as the elongated light source has, thereby providing a compact design.

It is noted that patent publication CN 111 913 249 A discloses a light guide plate for simulating a flowing water effect. It is further noted that patent publication US 10 286 571 B1 discloses a system of light emitting diodes and lightguides producing and distributing light in a luminaire. It is noted that patent publication WO 2021/130793 A1 discloses an optical device for LED lighting appliances having peripheral elongated portions specular with respect to a central zone. It is also noted that patent publication US 2021/0141148 A1 discloses a lighting device including light guide plates.

Advantageously, the light receiving ends of the elongated light guiding structures have a pitch that is unrelated to the pitch of the light source LEDs. Then, no alignment of the light source with respect to the optic module 1 in its length direction is required, rendering the optic module applicable to light sources of different design, also in terms of LED or laser pitch.

The light receiving ends of the groups of elongated light guiding structures can be aligned in a gapless manner, thereby minimizing optical losses in the optic module.

Further, the elongated light guiding structures may be tapered towards their light receiving ends, thereby improving a collimation performance of the optic module.

Further advantageous embodiments according to the invention are described in the following claims.

Further, the invention relates to a method according to claim 14.

It should be noted that the technical features described above or below may each on its own be embodied in an optic module, i.e. isolated from the context in which it is described, separate from other features, or in combination with only a number of the other features described in the context in which it is disclosed. Each of these features may further be combined with any other feature disclosed, in any combination.

The invention will now be further elucidated on the basis of a number of exemplary embodiments and an accompanying drawing. In the drawing:
Figure 1 shows a schematic perspective view of an optic module of a lighting unit according to the invention;
Figure 2 shows a schematic perspective cross sectional view of the optic module shown in Fig. 1;
Figure 3 shows a schematic perspective partial view of the optic module shown in Fig. 1;
Figure 4 shows a schematic partial top view of the optic module shown in Fig. 3;
Figure 5 shows a schematic perspective view of a lighting unit comprising the optic module shown in Fig. 1, and
Figure 6 shows a schematic side view of the lighting unit shown in Fig. 5.

It is noted that the figures show merely a preferred embodiment according to the invention. In the figures, the same reference numbers refer to equal or corresponding parts.

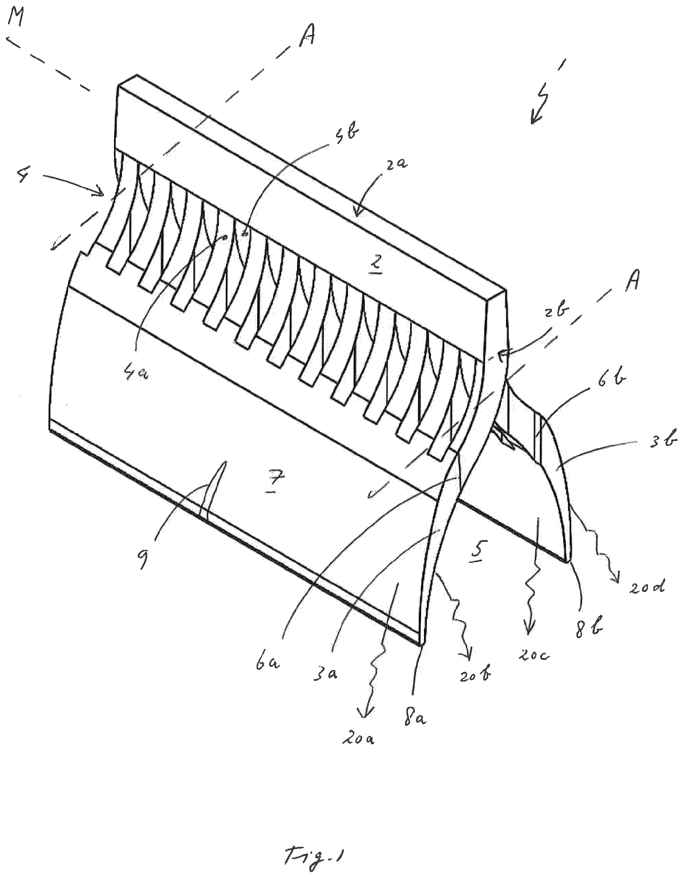

Figure 1 shows a shows a schematic perspective view of an optic module 1 of a lighting unit according to the invention. The optic module 1 is arranged for reshaping light that is emitted from a substantially elongated light source such as an array of LEDs. The LEDs can be realized in or on a printed circuit board PCB, e.g. by mounting the LEDs on the PCB or forming an integrated structure such as a chip on board COB structure, or a LED tube structure. The optic module 1 can be combined with the substantially elongated light source, e.g. by mounting the optic module 1 to the light source or vice versa, to form a lighting unit, e.g. a suspended lighting unit that is suspended from a ceiling or a recessed lighting unit that is recessed or built in a ceiling.

The LEDs may be arranged to emit visible and/or ultraviolet UV light. The visible light may have specific characteristics e.g. in terms of hue, lightness, brightness, chroma, colorfulness and/or saturation. As an example, the visible light may have a specific colour or brightness. As a further example, the light source may include an array of LEDs emitting mutually different colours for generating a specific overall colour appearance, e.g. a first group of LEDs emitting light having a first colour alternating, in the array, with a second group of LEDs emitting light having a second colour.

The elongated light source generally extends along a body axis, in a one-dimensional direction, e.g. as a linear, curved or wavy structure. The curved structure may include a partial or complete circular or elliptical contour. The structure may have a closed or nearly closed contour such as a circle, ellipse, rectangle or polygon. Also, the structure may include a single or a multiple number of kinks between subsequent straight, curved and/or wavy sections. The lighting unit can be used for lighting purposes in various types of buildings including hospitals, doctor's offices, dentist's offices, elderly homes, offices, schools, crèches, nursery schools, day care centers, etc. Further, the lighting unit can be implemented as surgical lighting, examination lighting or torch, or as an industrial luminaire such as industrial line luminaire, outdoor luminaire, parking area luminaire, vehicle luminaire e.g. in a bus, airplane, metro etc., or tunnel lighting luminaire.

The optic module 1 shown in Fig. 1 has a generally block shaped light mixing chamber 2. Further, the optic module 1 has two light emitting flanges 3a-b and a light distributor 4 optically coupled between the mixing chamber 2 and the light emitting flanges 4a-b as described in more detail below. The mixing chamber 2, the two light emitting flanges 3a-b and the light distributor 4 are generally made from a transparent or semi-transparent material, at least for a substantial portion thereof, so as to guide visible and/or ultraviolet light.

The light mixing chamber 2 is arranged for aligning with the substantially elongated light source, having a main axis M that has substantially a same or similar profile as the body axis of the light source, in the shown embodiment having a linear profile. As an alternative, the main axis M may have a curved or wavy profile corresponding to the structure of the elongated light source. The light mixing chamber 2 has a light receiving side 2a facing the light source. The light receiving side 2a is substantially flat to easily match with an light emitting side of the light source. Further, the light mixing chamber 2 has a light emitting side 2b opposite to the light receiving side 2a. Generally, the generally block shaped light mixing chamber 2 may have a length dimension matching the elongated light source. The length of the mixing chamber 2, along the main axis M, may be the same or slightly the same as the length of the light source, along the main axis M, to which the mixing chamber 2 is to be aligned.

The two light emitting flanges 3a-b are arranged next to each other, facing each other and having an intermediate space 5 therebetween, mainly parallel to light mixing chamber 2, substantially along the main axis M, running away from the mixing chamber 2, in the shown embodiment downwardly, and having a respective light entrance side 6 facing towards the light emitting side 2b of the mixing chamber 2. The light emitting flanges 3a-b have a generally continuous exterior surface 7 that generally has the same or similar dimension along the main axis M as the mixing chamber 2 has. In a specific embodiment, the exterior surface 7 may have a single or multiple number of cut-outs 9, e.g. extending from a free end 8 of the light emitting flanges 3. However, the exterior surface 7 may also be completely continuous, free of cut-outs.

The light distributor 4 is optically coupled between the light emitting side 2b of the mixing chamber 2, on the one hand, and the respective light entrance sides 6a-b of the light emitting flanges 3a-b. The light distributor 4 has two groups of elongated light guiding structures 4a-b that extend, like fingers, between the mixing chamber 2 and the light emitting flanges 3. The elongated light guiding structures 4a-b are slightly curved extending between the mixing chamber 2 and the light emitting flanges 3a-b, such that a first group of elongated light guiding structures 4a is slightly curved towards a first light emitting flange 3a, while a second group of elongated light guiding structures 4b is slightly curved towards a second light emitting flange 3b.

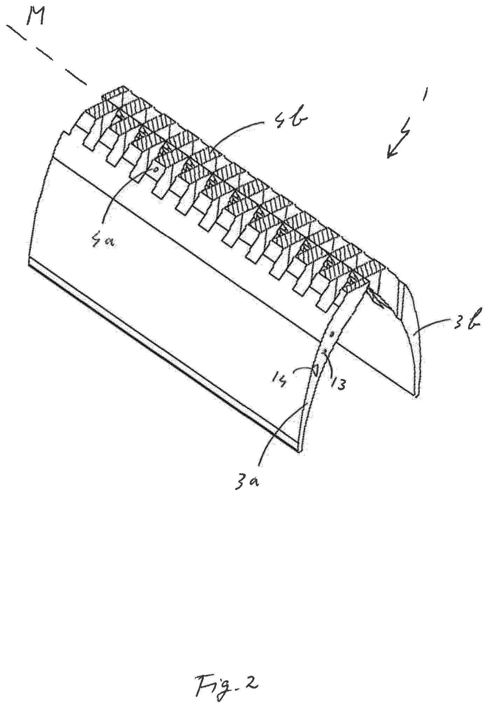

Figure 2 shows a schematic perspective cross sectional view of the optic module 1 shown in Fig. 1, along a cross section A-A. The groups of elongated light guiding structures 4a-b may be mainly symmetrical with respect to each other, as shown in Figs. 1-2, such that the first group of elongated light guiding structures 4a bends away from the second group of elongated light guiding structures 4b.

The elongated light guiding structures 4a-b of both groups have respective light receiving ends 11a-b arranged next to each other so as to be aligned and optically coupled with the light emitting side 2b of the block shaped light mixing chamber 2. In the shown embodiment, the light receiving ends 11 of the groups of elongated light guiding structures 4a-b are aligned, next to each other, in a gapless manner so that optically losses are counteracted. In another embodiment, the light receiving ends 11 may define interspaces, therebetween, e.g. in combination with a reflective coating provided on the light emitting side 2b of the light mixing chamber 2 for minimizing optical losses.

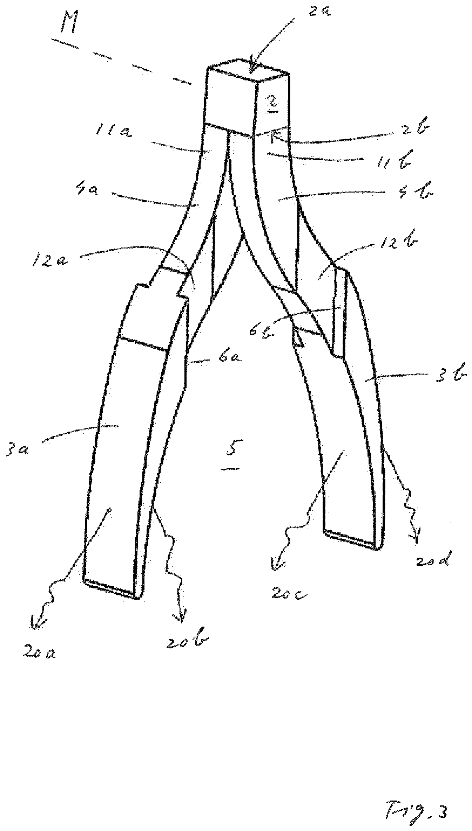

Figure 3 shows a schematic perspective partial view of the optic module 1 shown in Fig. 1. Here, an elongated light guiding structure 4a of the first group and an adjacent elongated light guiding structure 4b of the second group, along the main axis M, is shown, together with corresponding portions of the associated light mixing chamber 2 and first and second light emitting flanges 3a-b.

As shown in Figs. 1-3, the light receiving ends 11a-b of both groups of elongated light guiding structures 4a-b are aligned or positioned in an alternating manner. Here, a light receiving end 11a of the first group is followed, along the main axis M, by a light receiving end 11b of the second group, that is, subsequently, followed by a light receiving end 11a of the first group, and so on. In a repetitive, alternating pattern the light received from the light mixing chamber 2 is mainly evenly split into two beams entering the corresponding two emitting flanges 3. A first beam guided by the first group of elongated light guiding structures 4a enters a first emitting flange 3a, while a second beam guided by the second group of elongated light guiding structures 4b enters a second emitting flange 3b. Here, the elongated light guiding structures 4a-b of both groups each have a light emitting end 12a-b optically coupled, per group, to the light entrance side 6a-b of a respective light emitting flange 3a-b, thereby obtaining two distributed, split optical beams.

In the shown embodiment, the elongated light guiding structures 4a-b of a particular group are optically coupled to a common light emitting flange 3a-b. Then, there are two groups of elongated light guiding structures 4a-b and two groups of light emitting flanges 3a-b, each group of elongated light guiding structures optically coupled to a corresponding group of light emitting flanges 3a-b. The elongated light guiding structures 4a-b are optically coupled, per group, to a corresponding light emitting flange 3a-b. Alternatively, a first set of elongated light guiding structures of a particular group may be optically coupled to a first light emitting flange, while a second set of elongated light guiding structures of the particular group may be optically coupled to a second light emitting flange, e.g. by splitting the light emitting flange 3a shown in Fig. 1 into two portions.

Generally, the light emitting flanges 3a-b each form a continuous light emitting surface 7 optically coupled to a multiple number of elongated light guiding structures 3a-b of a particular group.

In operation, light received from the light source propagates via the light receiving side 2a of the light mixing chamber 2 towards the light emitting side 2b of the light mixing chamber 2, and, subsequently, via the elongated light guiding structures 4a-b, towards the light emitting flanges 3, as two mainly evenly distributed split light beams. Then, light is emitted from the light emitting flanges 3, as a collimated re-shaped beam 20.

As shown e.g. Fig. 1, in an embodiment, the light emitting flanges 3a-b are tapered away from their light receiving ends 6a-b for obtaining a downwardly oriented emitted light beam. The elongated light guiding structures 3a-b may be tapered towards their free ends 8a,b. Further, the elongated light guiding structures 3a-b include scattering particles 13, see e.g. Fig. 2, for contributing to a diffusive light beam. In principle, however, the elongated light guiding structures 3a-b may be free of scattering particles. Also, the exterior surface 7 may be provided with textures or facets 14 to direct the light downwardly.

Advantageously, the geometry and dimensions of the elongated light guiding structures 4a-b are mainly similar, thereby contributing to a substantial even distribution of the light over the two light emitting flanges 3a-b.

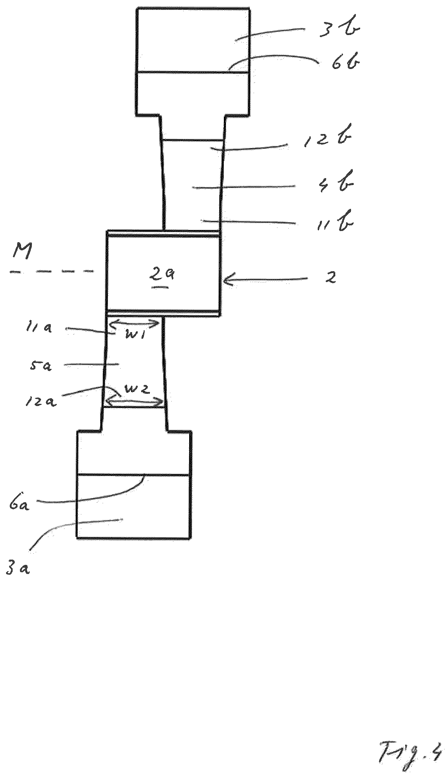

Figure 4 shows a schematic partial top view of the optic module shown in Fig. 3. Again, an elongated light guiding structure 4a of the first group and an adjacent elongated light guiding structure 4b of the second group is shown, together with corresponding portions of the associated light mixing chamber 2 and first and second light emitting flanges 3a-b. As shown, the elongated light guiding structures 4a-b are tapered towards their light receiving ends 11a-b. The width w of the elongated light guiding structure 4a-b, along the main axis M, varies along the light guiding structure 4a-b in order to improve collimation of the light beam. Here, a first width w1 at the light receiving end 11a-b is smaller than a second width w2 at the light emitting end 12a-b. As an example, the first width w1 may be circa 1.5 mm while the second width w2 may be circa 2.5 mm. However, generally, other geometries and dimensions of the elongated light guiding structures may be applicable.

The shown optic module is formed as an integral part, e.g. using an injecting molding process. In principle, the optic module 1 may be formed otherwise, e.g. by joining separate parts together, e.g. using a gluing process.

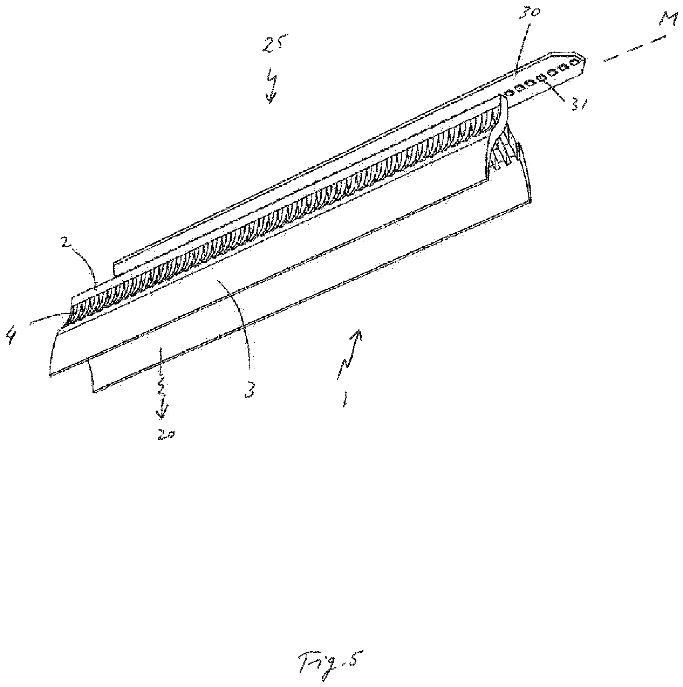

Figure 5 shows a schematic perspective view of a lighting unit 25 comprising the optic module 1 shown in Fig. 1. Here, the lighting unit includes a PCB 30 and an array of LEDs 31 mounted thereon and facing the light receiving side 2a of the mixing chamber 2. Here, the length of the mixing chamber 2, along the main axis M, may be the same or similar to the length of the light source 30, 31, along the main axis M, to which the mixing chamber 2 is aligned.

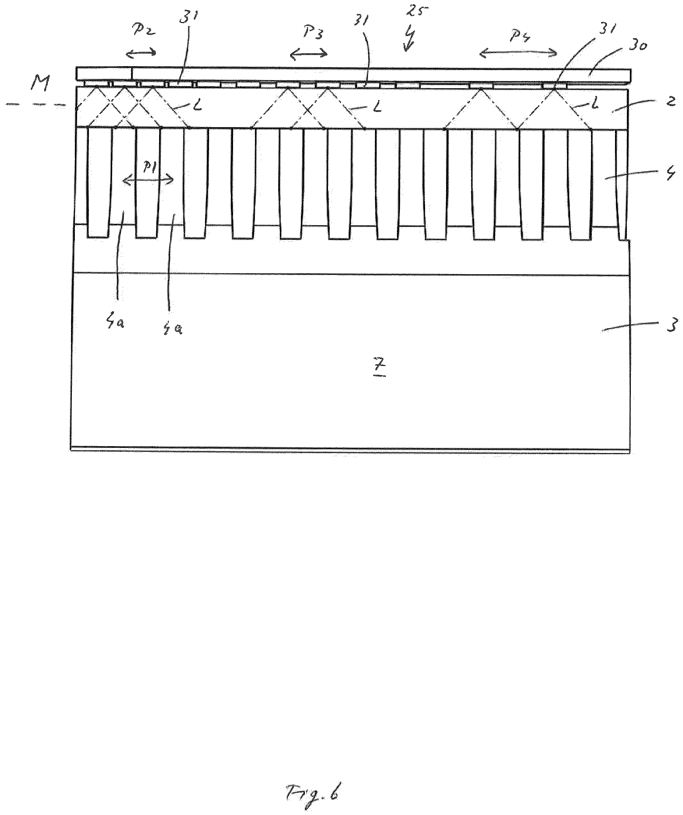

Figure 6 shows a schematic side view of the lighting unit 25 shown in Fig. 5. As shown, the light receiving ends 11a-b of the elongated light guiding structures 4a-b have a pitch defined by the mutual distance P1 between the light guiding structures 4a-b, said pitch P1 being unrelated to the pitch of the LEDs 31 of the light source. The pitch P2, P3, P4 of the LEDs is defined by the mutual distance between neighboring LEDs in a pattern. As the geometric pattern of the light beams L generated by the LEDs 31 is unrelated to the light guiding structures a mainly uniform light distribution along the main axis M is obtained. As a consequence, the optic module 1 is flexibly applicable to a variety of light sources, having varying LED pitches. Also, no alignment of the light source with respect to the optic module 1 along the main axis M is required.

According to an aspect of the invention, a method is provided for reshaping light emitted from a substantially elongated light source, comprising a step of using an optic module according to any of the preceding claims, wherein the generally block shaped light mixing chamber is aligned with a substantially elongated light source.

The invention is not restricted to the embodiments described above. It will be understood that many variants are possible.

The light receiving side 2a of the mixing chamber 2 may be substantially flat or may have another, curved surface, e.g. to match with a specific geometry of the light source.

Further, the optic module 1 may have more than two light emitting flanges 3, e.g. three or four light emitting flanges arranged next to each other and mainly parallel to the light mixing chamber 2, running away from the light mixing chamber 2. Then, the light distributor 4 may be provided with a corresponding number of groups of elongated light guiding structures, e.g. three or four groups of elongated light guiding structures, arranged next to each other, with their light receiving ends, so as to be aligned and optically coupled with the light emitting side 2b of the block shaped light mixing chamber 2, preferably in an alternating, repetitive manner, and such that the light emitting ends of the light guiding structures are optically coupled, per group, to the light entrance sides, respectively, of the respective light emitting flanges.

It is noted that the free ends 8 of the light emitting flanges 3 may run away from the light mixing chamber 2, downwardly, transversely to the main axis M, mutually mainly parallel and opposite to the light source 30, 31, as shown in the figures. Alternatively, the free ends 8 of the light emitting flanges 3 run away from the light mixing chamber 2 in another direction, e.g. mainly sidewardly, transversely to the main axis M, and mainly opposite to each other, or in yet another direction, transversely to the main axis M, slightly downwardly and slightly sidewardly, e.g. having a mutual angle of circa 30 degrees, circa 60 degrees, circa 90 degrees or circa 120 degrees.

Further, the elongated light guiding structures 3a-b may be tapered towards their free ends 8a,b, as shown in the figures. Alternatively, the free ends 8 of the light emitting flanges 3 may have a non-tapered optionally thicker and/or rounded profile.

These and other embodiments will be apparent for the person skilled in the art and are considered to fall within the scope of the invention as defined in the following claims. For the purpose of clarity and a concise description features are described herein as part of the same or separate embodiments.

## Claims

1. A lighting unit (25), comprising a substantially elongated light source (30, 31) and an optic module (1) for reshaping light emitted from the substantially elongated light source (30, 31), the optic module (1) comprising:
- a generally block shaped light mixing chamber (2) for aligning with the substantially elongated light source (30, 31), the light mixing chamber (2) having a light receiving side (2a) facing the light source (30, 31) and a light emitting side (2b) opposite to the light receiving side (2a), wherein the generally block shaped light mixing chamber (2) is aligned with the substantially elongated light source (30, 31);
- a multiple number of light emitting flanges (3a,b)arranged next to each other mainly parallel to the light mixing chamber (2), running away therefrom and having a respective light entrance side (6a,b) facing towards the light emitting side (2b) of the mixing chamber (2), and
- a light distributor (4) optically coupled between the light emitting side (2b) of the mixing chamber (2) and the respective light entrance sides (6a,b) of the light emitting flanges (3a,b), **characterized in that** the light distributor (4) having a multiple number of groups of elongated light guiding structures (4a,b),
wherein the elongated light guiding structures (4a,b) of all groups have respective light receiving ends (11a,b) arranged next to each other so as to be aligned and optically coupled with the light emitting side (2b) of the block shaped light mixing chamber (2),
wherein the light receiving ends (11a,b) of the groups of elongated light guiding structures (4a,b) are aligned in an alternating manner,
wherein the elongated light guiding structures (4a,b) of each group each have a light emitting end (12a,b) optically coupled, per group, to the light entrance side (6a,b) of a respective light emitting flange (3a,b)

2. A lighting unit according to claim 1, wherein the elongated light guiding structures are tapered towards their light receiving ends.

3. A lighting unit according to claim 1 or 2, wherein the light emitting flanges are tapered away from their light entrance sides.

4. A lighting unit according to any of the preceding claims, wherein the mixing chamber, the multiple number of light emitting flanges and the light distributor are made from a transparent or semi-transparent material and/or are arranged for guiding visible and/or ultraviolet light.

5. A lighting unit according to any of the preceding claims, wherein the light emitting flanges include scattering particles and/or have a continuous, facetted or textured exterior surface.

6. A lighting unit according to any of the preceding claims, wherein the light receiving ends of the groups of elongated light guiding structures are aligned in a gapless manner.

7. A lighting unit according to any of the preceding claims, comprising two light emitting flanges.

8. A lighting unit according to any of the preceding claims, wherein the block shaped light mixing chamber has a main axis having a substantially linear, curved or wavy profile.

9. A lighting unit according to any of the preceding claims, formed as an integral part and/or is made using an injection molding process.

10. A lighting unit according to any of the preceding claims, wherein a set of elongated light guiding structures of a particular group is optically coupled to a common light emitting flange, and/or wherein the light emitting flanges each form a continuous light emitting surface optically coupled to a multiple number of elongated light guiding structures.

11. A lighting unit according to any of the preceding claims, wherein the number of groups of light emitting flanges corresponds to the number of groups of elongated light guiding structures and/or wherein the elongated light guiding structures are optically coupled, per group, to a corresponding light emitting flange.

12. A lighting unit according to any of the preceding claims, wherein the light source includes an array of LEDs, in particular emitting mutually different colours, more particularly wherein the light source includes a first group of LEDs emitting light having a first colour alternating with a second group of LEDs emitting light having a second colour.

13. A lighting unit according to any of the preceding claims, wherein the light receiving ends of the elongated light guiding structures have a pitch that is unrelated to the pitch of the light source LEDs.

14. A method for reshaping light emitted from a substantially elongated light source, comprising a step of using a lighting unit (25) according to any of the preceding claims 1-13.

## Patentansprüche

1. Beleuchtungseinheit (25) mit einer im Wesentlichen länglichen Lichtquelle (30, 31) und einem optisches Modul (1) zum Umformen von Licht, das von der im Wesentlichen länglichen Lichtquelle (30, 31) emittiert wurde, wobei das optische Modul (1) umfasst:
- eine allgemein blockförmige Lichtmischkammer (2) zum Ausrichten auf die im Wesentlichen längliche Lichtquelle (30, 31), wobei die Lichtmischkammer (2) eine der Lichtquelle (30, 31) zugewandte lichtempfangende Seite (2a) und eine der lichtempfangenden Seite (2a) gegenüberliegende lichtemittierende Seite (2b) aufweist, wobei die allgemein blockförmige Lichtmischkammer (2) auf die im Wesentlichen längliche Lichtquelle (30, 31) ausgerichtet ist;
- eine Mehrzahl an nebeneinander, im Wesentlichen parallel zur Lichtmischkammer (2) angeordneten, von dort weg verlaufenden lichtemittierenden Flanschen (3a, b), die eine jeweilige Lichteintrittsseite (6a, b) aufweisen, die der lichtemittierenden Seite (2b) der Mischkammer (2) zugewandt ist, und
- einen Lichtverteiler (4), optisch gekoppelt zwischen der lichtemittierenden Seite (2b) der Mischkammer (2) und den jeweiligen Lichteintrittsseiten (6a, b) der lichtemittierenden Flansche (3a, b), **dadurch gekennzeichnet, dass** der Lichtverteiler (4) eine Mehrzahl an Gruppen länglicher Lichtleitstrukturen (4a, b) aufweist,
wobei die länglichen Lichtleitstrukturen (4a, b) aller Gruppen jeweilige lichtempfangende Enden (11a, b) aufweisen, die nebeneinander angeordnet sind, sodass sie auf die lichtemittierende Seite (2b) der blockförmigen Lichtmischkammer (2) ausgerichtet und optisch mit ihr gekoppelt sind,
wobei die lichtempfangenden Enden (11a, b) der Gruppen länglicher Lichtleitstrukturen (4a, b) abwechselnd ausgerichtet sind,
wobei die länglichen Lichtleitstrukturen (4a, b) jeder Gruppe jeweils ein lichtemittierendes Ende (12a, b) aufweisen, das pro Gruppe optisch mit der Lichteintrittsseite (6a, b) eines jeweiligen lichtemittierenden Flanschs (3a, b) gekoppelt ist.

2. Beleuchtungseinheit nach Patentanspruch 1, wobei die länglichen Lichtleitstrukturen zu ihren lichtaufnehmenden Enden hin konisch zulaufen.

3. Beleuchtungseinheit nach Patentanspruch 1 oder 2, wobei die lichtemittierenden Flansche von ihren Lichteintrittsseiten weg konisch zulaufen.

4. Beleuchtungseinheit nach einem der vorhergehenden Patentansprüche, wobei die Mischkammer, die Mehrzahl an lichtemittierenden Flanschen und der Lichtverteiler aus einem transparenten oder halbtransparenten Material hergestellt sind und/oder zum Leiten von sichtbarem und/oder ultraviolettem Licht angeordnet sind.

5. Beleuchtungseinheit nach einem der vorhergehenden Patentansprüche, wobei die lichtemittierenden Flansche Streupartikel umfassen und/oder eine durchgehende, facettierte oder strukturierte Außenfläche aufweisen.

6. Beleuchtungseinheit nach einem der vorhergehenden Patentansprüche, wobei die lichtaufnehmenden Enden der Gruppen länglicher Lichtleitstrukturen lückenlos ausgerichtet sind.

7. Beleuchtungseinheit nach einem der vorhergehenden Patentansprüche mit zwei lichtemittierenden Flanschen.

8. Beleuchtungseinheit nach einem der vorhergehenden Patentansprüche, wobei die blockförmige Lichtmischkammer eine Hauptachse aufweist, die ein im Wesentlichen lineares, gekrümmtes oder welliges Profil aufweist.

9. Beleuchtungseinheit nach einem der vorhergehenden Patentansprüche, einstückig gebildet und/oder mittels eines Spritzgussverfahrens hergestellt.

10. Beleuchtungseinheit nach einem der vorhergehenden Patentansprüche, wobei eine Reihe länglicher Lichtleitstrukturen einer bestimmten Gruppe optisch an einen gemeinsamen lichtemittierenden Flansch gekoppelt ist, und/oder wobei die lichtemittierenden Flansche jeweils eine kontinuierliche lichtemittierende Fläche bilden, die optisch an eine Mehrzahl an länglichen Lichtleitstrukturen gekoppelt ist.

11. Beleuchtungseinheit nach einem der vorhergehenden Patentansprüche, wobei die Anzahl der Gruppen von lichtemittierenden Flanschen der Anzahl der Gruppen von länglichen Lichtleitstrukturen entspricht und/oder wobei die länglichen Lichtleitstrukturen optisch pro Gruppe an einen entsprechenden lichtemittierenden Flansch gekoppelt sind.

12. Beleuchtungseinheit nach einem der vorhergehenden Ansprüche, wobei die Lichtquelle eine Anordnung von LEDs umfasst, die insbesondere sich voneinander unterscheidende Farben emittieren, wobei die Lichtquelle insbesondere eine erste Gruppe von LEDs umfasst, die Licht emittieren, das eine erste Farbe aufweist, sich abwechselnd mit einer zweiten Gruppe von LEDs, die Licht emittieren, das eine zweite Farbe aufweist.

13. Beleuchtungseinheit nach einem der vorhergehenden Patentansprüche, wobei die lichtaufnehmenden Enden der länglichen Lichtleitstrukturen einen Abstand aufweisen, der unabhängig vom Abstand der Lichtquellen-LEDs ist.

14. Verfahren zum Umformen von Licht, emittiert von einer im Wesentlichen länglichen Lichtquelle, umfassend einen Schritt des Verwendens einer Beleuchtungseinheit (25) nach einem der vorhergehenden Patentansprüche 1 bis 13.

## Revendications

1. Unité d'éclairage (25) comprenant une source de lumière (30, 31) sensiblement allongée et un module optique (1) pour remodeler la lumière émise par la source de lumière (30, 31) sensiblement allongée, le module optique (1) comprenant :
- une chambre de mélange de lumière généralement en forme de bloc (2) pour s'aligner avec la source de lumière (30, 31) sensiblement allongée, la chambre de mélange de lumière (2) ayant un côté de réception de lumière (2a) faisant face à la source de lumière (30, 31) et un côté d'émission de lumière (2b) opposé au côté de réception de lumière (2a), dans laquelle la chambre de mélange de lumière généralement en forme de bloc (2) est alignée avec la source de lumière (30, 31) sensiblement allongée (30, 31) ;
- une pluralité de brides d'émission de lumière (3a, b) agencées les unes à côté des autres, principalement parallèles à la chambre de mélange de lumière (2), s'éloignant de cette dernière et ayant un côté d'entrée de lumière (6a, b) respectif orienté vers le côté d'émission de lumière (2b) de la chambre de mélange (2), et
- un distributeur de lumière (4) couplé, par voie optique, entre le côté d'émission de lumière (2b) de la chambre de mélange (2) et les côtés d'entrée de lumière (6a, b) respectifs des brides d'émission de lumière (3a, b), **caractérisée en ce que** :
le distributeur de lumière (4) a une pluralité de groupes de structures de guidage de lumière allongées (4a, b),
dans laquelle les structures de guidage de lumière allongées (4a, b) de tous les groupes ont des extrémités de réception de lumière (11a, b) respectives agencées les unes à côté des autres afin d'être alignées et optiquement couplées avec le côté d'émission de lumière (2b) de la chambre de mélange de lumière en forme de bloc (2),
dans laquelle les extrémités de réception de lumière (11a, b) des groupes de structures de guidage de lumière allongées (4a, b) sont alignées d'une manière alternée,
dans laquelle les structures de guidage de lumière allongées (4a, b) de chaque groupe ont chacune une extrémité d'émission de lumière (12a, b) optiquement couplée, par groupe, au côté d'entrée de lumière (6a, b) d'une bride d'émission de lumière (3a, b) respective.

2. Unité d'éclairage selon la revendication 1, dans laquelle les structures de guidage de lumière allongées sont progressivement rétrécies vers leurs extrémités de réception de lumière.

3. Unité d'éclairage selon la revendication 1 ou 2, dans laquelle les brides d'émission de lumière sont progressivement rétrécies à l'opposé de leurs côtés d'entrée de lumière.

4. Unité d'éclairage selon l'une quelconque des revendications précédentes, dans laquelle la chambre de mélange, la pluralité de brides d'émission de lumière et le distributeur de lumière sont réalisés à partir d'un matériau transparent ou semi-transparent et/ou sont agencés pour guider la lumière visible et/ou ultraviolette.

5. Unité d'éclairage selon l'une quelconque des revendications précédentes, dans laquelle les brides d'émission de lumière comprennent des particules de diffusion et/ou ont une surface extérieure continue, à facettes ou texturée.

6. Unité d'éclairage selon l'une quelconque des revendications précédentes, dans laquelle les extrémités de réception de lumière des groupes de structures de guidage de lumière allongées sont alignées sans interstice entre elles.

7. Unité d'éclairage selon l'une quelconque des revendications précédentes comprenant deux brides d'émission de lumière.

8. Unité d'éclairage selon l'une quelconque des revendications précédentes, dans laquelle la chambre de mélange de lumière en forme de bloc a un axe principal ayant un profil sensiblement linéaire, courbé ou ondulé.

9. Unité d'éclairage selon l'une quelconque des revendications précédentes, formée comme une partie solidaire et/ou est réalisée en utilisant un procédé de moulage par injection.

10. Unité d'éclairage selon l'une quelconque des revendications précédentes, dans laquelle un ensemble de structures de guidage de lumière allongées d'un groupe particulier est optiquement couplé à une bride d'émission de lumière commune, et/ou dans laquelle les brides d'émission de lumière forment chacune une surface d'émission de lumière continue optiquement couplée à une pluralité de structures de guidage de lumière allongées.

11. Unité d'éclairage selon l'une quelconque des revendications précédentes, dans laquelle le nombre de groupes de brides d'émission de lumière correspond au nombre de groupes de structures de guidage de lumière allongées et/ou dans laquelle les structures de guidage de lumière allongées sont optiquement couplées, par groupe, à une bride d'émission de lumière correspondante.

12. Unité d'éclairage selon l'une quelconque des revendications précédentes, dans laquelle la source de lumière comprend un groupe de LED, en particulier émettant des couleurs mutuellement différentes, plus particulièrement dans laquelle la source de lumière comprend un premier groupe de LED émettant de la lumière qui a une première couleur qui alterne avec un deuxième groupe de LED émettant de la lumière qui a une deuxième couleur.

13. Unité d'éclairage selon l'une quelconque des revendications précédentes, dans laquelle les extrémités de réception de lumière des structures de guidage de lumière allongées ont un pas qui est indépendant du pas des LED de la source de lumière.

14. Procédé pour remodeler la lumière émise à partir d'une source de lumière sensiblement allongée, comprenant une étape comprenant le fait d'utiliser une unité d'éclairage (25) selon l'une quelconque des revendications 1 à 13.
